# EUROPÄISCHE PATENTSCHRIFT

(11) **EP 2 412 417 B1**
(45) Veröffentlichungstag und Bekanntmachung des Hinweises auf die Patenterteilung: **11.09.2013**
(21) Anmeldenummer: 11167592.2
(22) Anmeldetag: 26.05.2011
(51) Int. Cl.: B01D 29/21, B01D 35/153

(54) **Filterelement und Filter zur Filtrierung von Fluiden**
Filter element and filter for filtering fluids
Elément de filtre et filtre permettant de filtrer des fluides

(30) Priorität: 30.07.2010 DE 102010032934
(43) Veröffentlichungstag der Anmeldung: 01.02.2012
(73) Patentinhaber: MANN + HUMMEL GMBH, 71638 Ludwigsburg (DE)
(72) Erfinder: Moreno Linares, Andrés, 71067 Sindelfingen (DE); Mieß, Silke, 71640 Ludwigsburg (DE)

(56) Entgegenhaltungen:
- WO-A2-2007/003517
- DE-A1-102006 029 107
- DE-U1-202005 007 870

## Beschreibung

### Technisches Gebiet

Die Erfindung betrifft ein Filterelement eines Filters zur Filtrierung von Fluiden, insbesondere Motoröl oder Kraftstoff einer Brennkraftmaschine insbesondere eines Kraftfahrzeugs, mit einem insbesondere sternförmig gefalteten Filtermedium in koaxialer Form, das an einer Anschluss-Stirnseite einen Anschlussabschnitt mit einer Anschlussöffnung zu einem Innenraum des Filtermediums aufweist für ein Anschlussrohrstück eines Filtergehäuses, mit einem an dem Anschlussabschnitt befestigten Deckelkörper, der eine harte Deckelringscheibe aufweist, an der zu dieser koaxial eine flexible ringartige Rücklaufsperrmembran befestigt ist, und ein zur Anschlussöffnung koaxialer Deckeldurchlass für das Anschlussrohrstück durch die Deckelringscheibe und die Rücklaufsperrmembran hindurch führt.

Die Erfindung betrifft außerdem einen Filter zur Filtrierung von Fluiden, insbesondere Motoröl oder Kraftstoff einer Brennkraftmaschine insbesondere eines Kraftfahrzeugs, mit einem Filterelement, das ein insbesondere sternförmig gefaltetes Filtermedium in koaxialer Form umfasst, das an einer Anschluss-Stirnseite einen Anschlussabschnitt mit einer Anschlussöffnung zu einem Innenraum des Filtermediums aufweist für ein Anschlussrohrstück eines Filtergehäuses, und mit einem an der Stirnseite des Filtermediums angeordneten Deckelkörper, der eine harte Deckelringscheibe aufweist, an der eine flexible ringartige Rücklaufsperrmembran koaxial befestigt ist, wobei ein zur Anschlussöffnung koaxialer Deckeldurchlass für das Anschlussrohrstück durch die Deckelringscheibe und die Rücklaufsperrmembran hindurch führt.

### Stand der Technik

Aus der WO 2007/003517 A2 ist ein Filter insbesondere für Motoröl oder Kraftstoff einer Brennkraftmaschine bekannt. In einem Filtergehäuse befindet sich ein Filterelement aus zickzackförmig gefaltetem Filterpapier. An einer Stirnseite des Filterelements ist eine Endscheibe angebracht. An der Endscheibe befindet sich eine Rücklaufsperrmembran, welche mit dieser verklebt, verschweißt oder mit einem Zweikomponentenverfahren angefügt ist. Die Rücklaufsperrmembran gibt rohseitig den Flüssigkeitsstrom frei. Sie verhindert bei einer Unterbrechung des Flüssigkeitsstroms, insbesondere bei einem Stillstand der Brennkraftmaschine, einen Rückstrom in einen Zulaufkanal des Filtergehäuses durch axiale oder radiale Anlage der Rücklaufsperrmembran am Filtergehäuse. Die Endscheibe und die Rücklaufsperrmembran weisen eine zum Innenraum des Filtermediums koaxiale Öffnung auf, in der ein Dichtdom des Filtergehäuses eingesteckt wird. Außen an der Endscheibe sind Schnappnasen angebracht, so dass die Endscheibe mit der Rücklaufsperrmembran mittels einer Schnappverbindung an das Filtermedium angefügt werden kann. Beim axialen Aufschieben auf die Endfläche des Filterelements greifen die Schnappnasen seitlich in die Zwischenräume der gefalteten Filterbahnen des Filterelements über einer axialen Verklebung der Filterbahnen ein und stellen somit eine lösbare Verbindung her.

Außerdem ist aus der DE 20 2005 007 870 U1 eine Filtereinrichtung bekannt, welche eine Endscheibe aufweist, die über eine Schnappverbindung mit einem im Innenraum eines Filterelementes der Filtereinrichtung angeordneten Stützkörper verbunden ist. Die Endscheibe bildet ein Überströmventil der Filtereinrichtung.

Der Erfindung liegt die Aufgabe zugrunde, ein Filterelement und einen Filter der eingangs genannten Art auszugestalten, bei denen der Deckelkörper einfach und zuverlässig mit dem Filtermedium verbunden werden kann. Der Deckelkörper soll darüber hinaus kompakt aufgebaut sein, insbesondere sollen seine radialen Abmessungen möglichst gering sein.

### Offenbarung der Erfindung

Diese Aufgabe wird erfindungsgemäß dadurch gelöst, dass auf der Seite der Deckelringscheibe, die dem Filtermedium zugewandt ist, koaxial zum Deckeldurchlass ein Verbindungsrohrabschnitt angeordnet ist, der in der Anschlussöffnung steckt und der an seiner radial äußeren Umfangsseite eine sich wenigstens teilumfänglich erstreckende Wulst aufweist, deren Außendurchmesser größer ist als der kleinste Durchmesser der Anschlussöffnung, und die Wulst und der Anschlussabschnitt zumindest zur Montage in radialer Richtung relativ zueinander elastisch verformbar sind.

Erfindungsgemäß ist also der Deckelkörper mit dem Filtermedium rein mechanisch über eine Klemmverbindung verbunden. Der Verbindungsrohrabschnitt wird zum Verbinden des Deckelkörpers mit dem Filtermedium einfach in die Öffnung des Innenraums des Filtermediums eingesteckt, ohne dass zusätzliches Werkzeug oder bestimmte Anforderungen an die Umgebungsbedingungen, wie Temperatur und/oder Luftfeuchtigkeit, erforderlich sind. Der Verbindungsrohrabschnitt zentriert dabei den Deckelkörper bezüglich des Filtermediums. Beim Einstecken des Verbindungsrohrabschnitts wird die Wulst mit geringem Kraftaufwand über den Bereich des Anschlussabschnitts mit dem kleinsten Durchmesser hinweg geschoben. Dabei werden die Wulst und/oder des Anschlussabschnitt elastisch verformt. Das " Einschnappen" der Wulst hinter der Engstelle des Anschlussabschnitts ist akustisch wahrnehmbar. Nach Überwinden der engsten Stelle ist die Wulst formschlüssig im Anschlussabschnitt verpresst und hält so den Deckelkörper fest am Filtermedium. Die Materialien, aus denen die Wulst und der Anschlussabschnitt sind, können so gewählt sein, dass sie zunächst für den Zusammenbau noch elastisch verformbar sind. Später können sie insbesondere mittels einer Wärmebehandlung und durch Alterung aushärten, so dass die plastische Verformbarkeit abnimmt und die Haltekraft zunimmt. Dadurch gewinnt die Verpressung des Verbindungsrohrabschnitts im Anschlussabschnitt des Filtermediums an Zugfestigkeit. Durch die Anbringung des Verbindungsrohrabschnitts radial innen am Deckelkörper sind die Abmessungen des Deckelkörpers in radialer Richtung deutlich geringer als bei dem aus dem Stand der Technik bekannten Deckelkörper, bei dem radial außen Schnappnasen angebracht sind. Im Unterschied zu den Schnappnasen, greift die erfindungsgemäße Wulst nicht zwischen die Falten des Filtermediums ein, sondern presst in radialer Richtung gegen die Faltkanten des Filtermediums. Auf diese Weise wird zusätzlich eine Verdrehung des Deckelkörpers relativ zum Filtermedium verhindert, ohne dass dabei die Falten in Umfangsrichtung relativ zueinander verschoben werden. Der Deckelkörper kann einfach komplett mit der Rücklaufsperrmembran vorgefertigt werden. Das Filtermedium kann nach dem Anbau des Deckelkörpers sofort eingesetzt werden. Es ist nicht erforderlich, ein Aushärten von Klebstoff abzuwarten, wie das bei aus dem Stand der Technik bekannten Klebeverbindungen, bei denen der Deckelkörper an die Stirnseite des Filtermediums geklebt wird, nötig ist. Der herstellungstechnische Aufwand, insbesondere die Verwendung von Werkzeugen und Material, ist deutlich geringer als bei Klebeverfahren. Es ist insbesondere nicht nötig, einen Klebeprozess und eine Klebemaschine hinsichtlich einer homogenen Applikation und gleicher Füllmenge des Klebstoffes zu optimieren und zu kontrollieren. Die erfindungsgemäße Klemmverbindung gewährleistet darüber hinaus einfach und günstig eine reproduzierbare Prozesssicherheit während der Montage.

Bei einer vorteilhaften Ausführungsform kann der Anschlussabschnitt eine Ring-Endscheibe aufweisen, die koaxial zum Filtermedium an der Anschluss-Stirnseite des Filtermediums befestigt ist. Die Ring-Endscheibe kann vorteilhafterweise als Folienendscheibe aus einem unter Wärmeeinwirkung aufquellenden Material, das insbesondere Nitrilkautschuk enthält, realisiert sein. Die Folienendscheibe wird hierzu auf die Anschluss-Stirnseite des gefalteten Filtermediums aufgelegt und erwärmt. Das Folienmaterial quillt auf, dringt in die Faltenzwischenräume ein und verbindet sich dichtend mit dem Filtermedium. Mit der Folienendscheibe kann auf einfache Weise zugleich eine stabilisierende und die Stirnseiten des Filtermediums abdichtende Ring-Endscheibe realisiert werden, die gleichzeitig eine radial innen liegende Dichtung mit bildet. Die Ring-Endscheibe stabilisiert das Filtermedium an der Anschluss-Stirnseite mechanisch. Die Wulst des Verbindungsrohrabschnitts kann so stabil in axialer Richtung hinter der Ring-Endscheibe verrastet werden.

Bei einer weiteren vorteilhaften Ausführungsform kann die Deckelringscheibe aus hartem Kunststoff und die Rücklaufsperrmembran kann aus Silikon sein kann. Der Deckelkörper kann so einfach als Zweikomponentenbauteil hergestellt werden, indem die Rücklaufsperrmembran an die Deckelringscheibe angespritzt wird. Kunststoffe können einfach recycelt werden. Silikon bleibt auch bei großen Temperaturschwankungen elastisch und ist gegen Öl und Kraftstoff resistent. Rücklaufsperrmembranen aus Silikon können für eine Fahrzeuglebensdauer ausgelegt werden.

Vorteilhafterweise kann die Deckelringscheibe auf der Seite, an der die Rücklaufsperrmembran angeordnet ist, einen axialen Fortsatz aufweisen, der mit einem Befestigungsabschnitt der Rücklaufsperrmembran verbunden ist. An dem Fortsatz kann die Rücklaufsperrmembran stabil befestigt werden. Er wirkt als radiale Stabilisierung und als Gegenlager und Zentrierhilfe für das Anschlussrohrstück des Filtergehäuses. Der axiale Fortsatz kann gleichzeitig als axialer Anschlag wirken, der an einem entsprechenden Absatz des Filtergehäuses anliegt, so dass durch einen verbleibenden Raum eine definierte Vorspannung der Rücklaufsperrmembran bei der Anlage an eine entsprechende Dichtfläche des Filtergehäuses realisierbar ist.

Ferner kann vorteilhafterweise die Deckelringscheibe eine Vielzahl von Ankeröffnungen für entsprechende Befestigungsnasen der Rücklaufsperrmembran aufweisen, die in der Nähe des Deckeldurchlasses umfänglich verteilt angeordnet sind. Die Befestigungsnasen greifen stabil in die Ankeröffnungen ein und verhindern so eine Verschiebung der Rücklaufsperrmembran bezüglich der Deckelringscheibe in radialer Richtung und in Umfangsrichtung. Die Verbindung der Rücklaufsperrmembran mit der Deckelringscheibe kann einfach beim Anspritzen oder Gießen des Membranmaterials, insbesondere Silikon, an die Deckelringscheibe erfolgen. Dabei fließt das zunächst noch fließfähige Membranmaterial in die Ankeröffnungen und bildet dort die entsprechenden Befestigungsnasen. Nach dem Aushärten des Membranmaterials entsteht eine stabile Verbindung zwischen der Rücklaufsperrmembran und der Deckelringscheibe. Da die Verbindung zur Deckelringscheibe mit den Befestigungsnasen und den Ankeröffnungen realisiert wird, kann auf einen Haftvermittler beim Anspritzen oder Gießen des Membranmaterials verzichtet werden.

Bei einer weiteren vorteilhaften Ausführungsform kann ein radial innerer Abschnitt der Rücklaufsperrmembran als radiale Dichtung zur Abdichtung des Deckeldurchlasses gegen das Anschlussrohrstück ausgebildet sein. Auf eine zusätzliche Radialdichtung kann somit verzichtet werden. Die in die Rücklaufsperrmembran integrierte radiale Dichtung ist verschiebungssicher und verliersicher an dem Deckelkörper befestigt.

Außerdem wird die Aufgabe erfindungsgemäß durch den Filter dadurch gelöst, dass auf der Seite der Deckelringscheibe, die dem Filtermedium zugewandt ist, ein zum Deckeldurchlass koaxialer Verbindungsrohrabschnitt befestigt ist, dessen Außendurchmesser kleiner ist als der Durchmesser der Anschlussöffnung, und der an seiner radial äußeren Umfangsseite eine sich wenigstens teilumfänglich erstreckende Wulst aufweist, deren Außendurchmesser größer ist als der Durchmesser der Anschlussöffnung, und die Wulst und der Anschlussabschnitt zumindest zur Montage in radialer Richtung relativ zueinander elastisch verformbar sind. Die oben in Verbindung mit dem erfindungsgemäßen Filterelement aufgezeigten Vorteile gelten für den Filter entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläuteil wird. Der Fachmann wird die in der Zelchnung, der Beschreibung und den Ansprüchen in Kombination offenbarten Merkmale zweckmäßigerweise auch einzeln betrachten und zu sinnvollen weiteren Kombinationen zusammenfassen. Es zeigen
- Figur 1: schematisch einen Schnitt eines Filters für Motoröl einer Brennkraftmaschine mit einem austauschbaren Filterelement;
- Figur 2: schematisch einen Halbschnitt des Filterelements aus der Figur 1;
- Figur 3: schematisch eine Detailansicht des Filterelements aus der Figur 2 im dortigen Bereich III im Bereich eines Deckels mit einer Rücklaufsperrmembran;
- Figur 4: schematisch eine Draufsicht einer Deckelringscheibe des Deckels des Filterelements aus den Figuren 1 bis 3;
- Figur 5: schematisch einen Schnitt der Deckelringscheibe aus der Figur 4 entlang der dortigen Schnittlinie V;
- Figur 6: einen Schnitt des Deckels des Filterelements aus den Figuren 1 bis 5.

In den Figuren sind gleiche Bauteile mit gleichen Bezugszeichen versehen.

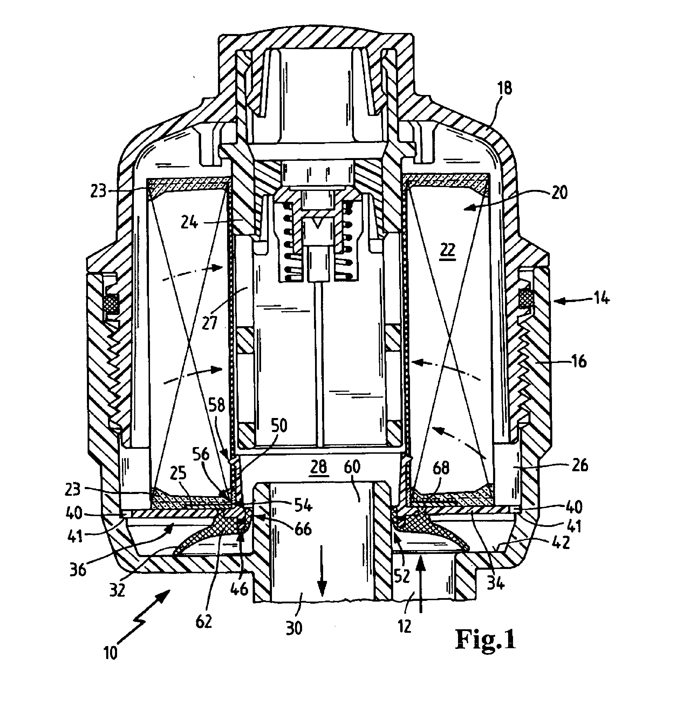

In der Figur 1 ist ein Schnitt eines Filters 10 für Motoröl eines ansonsten nicht gezeigten Ölkreislaufs einer Brennkraftmaschine eines Kraftfahrzeugs dargestellt. Das zu filternde Motoröl fließt durch einen Zulauf 12 in ein Filtergehäuse 14 ein.

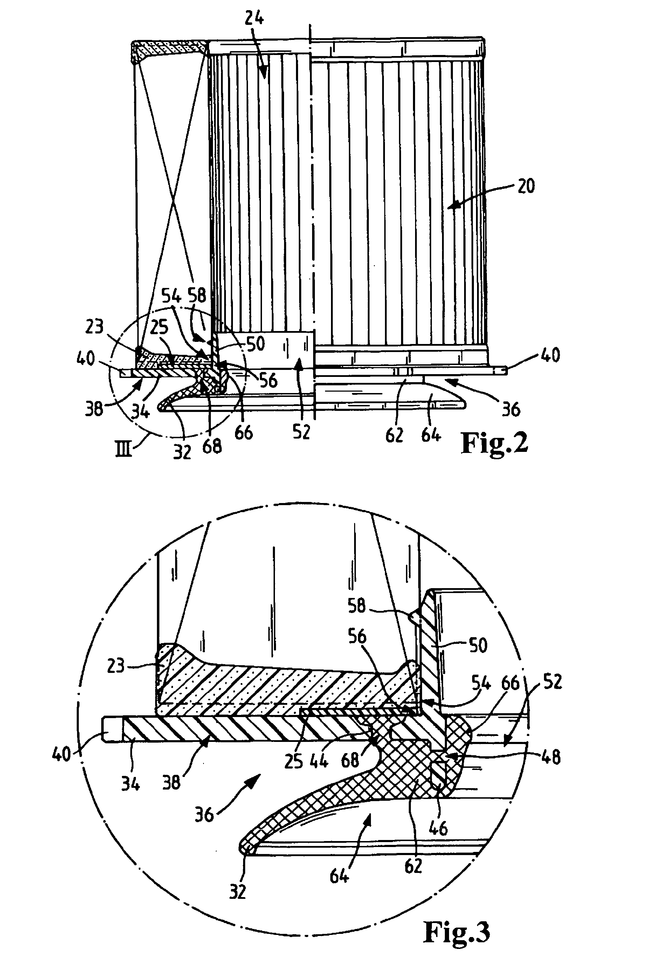

Das Filtergehäuse 14 besteht aus einem Anschlussteil 16, in das ein Filtertopf 18 eingeschraubt ist. Im Filtergehäuse 14 befindet sich ein austauschbares Filterelement 20, das in den Figuren 2 und 3 im Detail gezeigt ist.

Das Filterelement 20 ist aus zickzackförmig gefaltetem Filtermedium 22, das an seinen Stirnseiten, von denen die dem Anschlussteil 16 zugewandte Anschluss-Stirnseite im Detail in der Figur 3 gezeigt ist, jeweils mit einer ringförmigen Folienendscheibe 23 verklebt ist. Die Folienendscheiben 23 bestehen aus einem unter Wärmeeinwirkung aufquellenden Material, welches beispielsweise Nitrilkautschuk enthält. An der Anschluss-Stirnseite ist eine Vliesringscheibe als zusätzliche Stützscheibe 25 in die Folienendscheibe 23 eingebettet. Die Stützscheibe 25 schließt radial innen mit inneren Faltkanten des Filtermediums 22 ab. Der Außendurchmesser der Stützscheibe 25 ist kleiner als der Außendurchmesser des Filtermediums 22. Die Stützscheibe 25 dient zur zusätzlichen mechanischen Stabilisierung der Anschluss-Stirnseite insbesondere in dem Dichtbereich des Filtermediums 22 und schützt den Rand der Anschlussstirnseitigen Öffnung eines Innenraums 28 des Filtermediums 22. Auf diese Weise werden Beschädigungen bei der Montage und Demontage des Filterelements 20 verhindert. Durch die Verwendung der aufquellenden Folienendscheiben 23 kann auf einen separaten Klebstoff zum Verkleben der Stirnseiten des Filtermediums 22 verzichtet werden. Das Filtermedium 22 ist auf ein Mittelrohr 24 gesteckt und wird beim Zusammenfügen des Filtergehäuses 14 fest eingespannt.

Das zu reinigende Motoröl strömt durch den Zulauf 12 in einen rohseitigen Einlassringraum 26, der sich radial außerhalb des Filtermediums 22 befindet. Von dort aus durchströmt das Motoröl das Filtermedium 22 radial von außen nach innen und tritt auf der Reinseite durch Öffnungen 27 des Mittelrohrs 24 in den Innenraum 28 des Filterelements 20 ein. Vom Innenraum 28 strömt das gefilterte Motoröl durch einen Ablauf 30 wieder aus dem Filtergehäuse 14 aus in den Ölkreislauf.

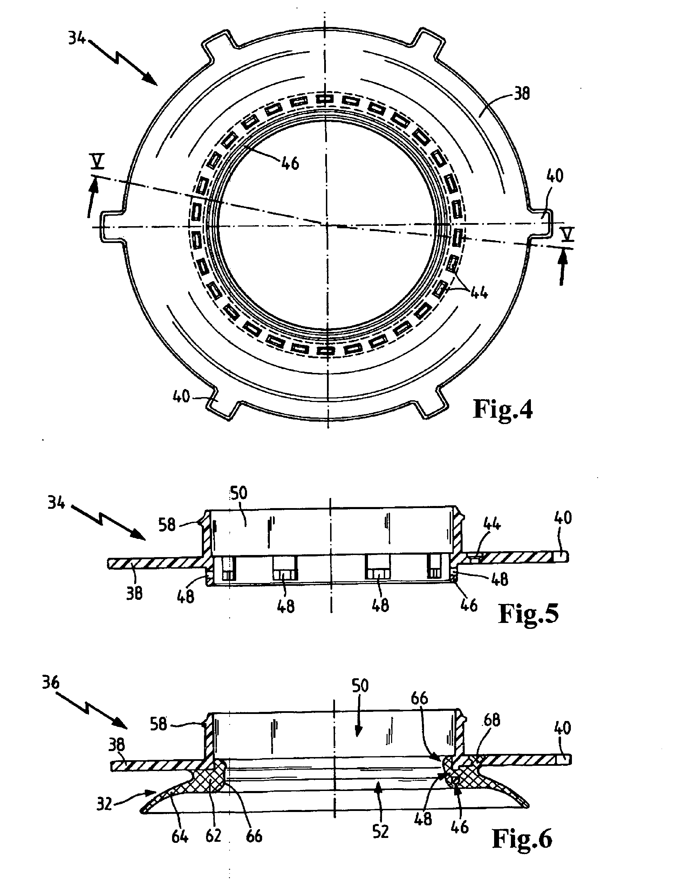

Es ist, wie insbesondere in den Figuren 3 und 6 gezeigt, eine insgesamt ringförmige Rücklaufsperrmembran 32 an einer Deckelringscheibe 34 des Filterelements 20 angeordnet. Die Rücklaufsperrmembran 32 gibt rohseitig den Motorölstrom frei. Bei einer Unterbrechung des Motorölstroms, beispielsweise bei einem Stillstand der Brennkraftmaschine, verhindert sie einen Rückstrom in den Zulauf 12, indem sie axial an einer Dichtungsfläche 42 des Filtergehäuses 14 anliegt. Die Funktionsweise der Rücklaufsperrmembran 32 in derartigen Filtern 10 ist hier nicht weiter von Interesse.

Die Deckelringscheibe 34 und die Rücklaufsperrmembran 32 bilden zusammen einen Deckel 36. Die Rücklaufsperrmembran 32 ist aus Silikon. Die Deckelringscheibe 34 ist aus hartem Kunststoff. Die Rücklaufsperrmembran 32 ist nach einem Zweikomponentenverfahren an die Deckelringscheibe 34 gespritzt oder gegossen.

Die Deckelringscheibe 34, die in den Figuren 4 und 5 im Detail gezeigt ist, besteht aus einem Ringscheibenabschnitt 38, welcher sich parallel zur Anschluss-Stirnseite des Filtermediums 22 erstreckt und flächig an dieser anliegt.

Der Ringscheibenabschnitt 38 verfügt radial außen umfänglich verteilt über eine Mehrzahl von radialen Nasen 40. Die Nasen 40 liegen seitlich auf einem Anschlag 41 des Filtergehäuses 14 auf, so dass durch den verbleibenden Raum eine vorgebbare Vorspannung bei der Anlage der Rücklaufsperrmembran 32 an der Dichtungsfläche 42 des Filtergehäuses 14 herstellbar ist. Die Nasen 40 überragen das Filtermedium 22 in radialer Richtung.

Der Ringscheibenabschnitt 38 weist in der Nähe seines radial inneren Randes eine Vielzahl von Ankeröffnungen 44 auf, welche umfänglich gleichmäßig verteilt angeordnet sind.

Zwischen dem radial inneren Rand des Ringscheibenabschnitts 38 und den Ankeröffnungen 44 ist ein rohrartiger Fortsatz 46 einstückig mit dem Ringscheibenabschnitt 38 verbunden, der sich auf der dem Filtermedium 22 gegenüberliegenden Seite in axialer Richtung erstreckt. Der Fortsatz 46 weist in regelmäßigen Abständen Durchbrüche 48 auf, die in der Figur 5 gezeigt sind.

Auf der Seite der Deckelringscheibe 34, die der Rücklaufsperrmembran 32 und dem Fortsatz 46 abgewandt ist, ist ein Verbindungsrohrabschnitt 50 einstückig mit dem Ringscheibenabschnitt 38 verbunden, mit der der Deckel 36 im Filtermedium 22 steckt und mit diesem fest verbunden ist. Der Verbindungsrohrabschnitt 50 und der Fortsatz 46 umgeben einen zum Innenraum 28 des Filtermediums 22 koaxialen Deckeldurchlass 52. Der Deckeldurchlass 52 führt durch die Deckelringscheibe 34 und die Rücklaufsperrmembran 32 hindurch.

Der Außendurchmesser des Verbindungsrohrabschnitts 50 ist kleiner als der Innendurchmesser der Folienendscheibe 23 und der Stützscheibe 25. Die Öffnungen der Folienendscheibe 23 und der Stützscheibe 25 sind Teil einer Anschlussöffnung 54 zum Innenraum 28. Die Anschlussöffnung 54 befindet sich in einem Anschlussabschnitt 56 des Filtermediums 22, der durch den Anschlussstirnseitigen Bereich des Filtermediums 22, die Folienendscheibe 23 und die Stützscheibe 25 gebildet wird.

Ein Anschlussrohrstück 60 des Anschlussteils 16 mündet in den Ablauf 30. Das Anschlussrohrstück 60 ragt durch den Deckeldurchlass 52 des Deckels 36 und durch die Anschlussöffnung 54 des Anschlussabschnitts 56 hindurch in den Innenraum 28 des Filtermediums 22.

Der Verbindungsrohrabschnitt 50 weist an seiner radial äußeren Umfangsseite eine umfängliche Wulst 58 auf. Die Wulst 58 befindet sich in der Nähe des vom Ringscheibenabschnitt 38 abgewandten freien Endes des Verbindungsrohrabschnitts 50. Der Außendurchmesser der Wulst 58 ist, wie insbesondere in der Figur 3 gezeigt, größer als der Durchmesser der Anschlussöffnung 54 im Bereich der Folienendscheibe 23 und der Stützscheibe 25.

Die Rücklaufsperrmembran 32 verfügt über einen Befestigungsabschnitt 62, einen Membranabschnitt 64 und einen Dichtungsabschnitt 66, die einstückig miteinander verbunden sind. Der Befestigungsabschnitt 62 befindet sich radial außerhalb des Fortsatzes 46 und liegt flächig am Fortsatz 46 an. Der Dichtungsabschnitt 66 befindet sich radial innerhalb des Fortsatzes 46 und liegt ebenfalls flächig an diesem an. Der Fortsatz 46 ist zwischen dem Befestigungsabschnitt 62 und dem Dichtungsabschnitt 66 eingebettet. Beim Anspritzen oder Angießen der Rücklaufsperrmembran 32 fließt Silikon durch die Durchbrüche 48 und bildet so eine feste Verbindung mit dem Fortsatz 46.

Der Dichtungsabschnitt 66 bildet den radial inneren Rand der Rücklaufsperrmembran 32. Er dichtet den Deckeldurchlass 52 gegen die radial äußere Umfangswand des Anschlussrohrstücks 60 ab.

Der Membranabschnitt 64 schließt sich radial außen an den Befestigungsabschnitt 62 an. Er befindet sich auf der dem Ringscheibenabschnitt 38 abgewandten Seite des Befestigungsabschnitts 62. Der Membranabschnitt 64 ist vom Innenraum 24 in axialer Richtung betrachtet konvex geformt.

Zur Herstellung des Filterelements 20 wird das Filtermedium 22 zickzackförmig gefaltet und zu einer koaxialen Form geschlossen.

Die Folienendscheiben 23 werden auf die jeweiligen Stirnflächen des gefalteten Filtermediums 22 gelegt. Auf die anschluss-stirnseitige Folienendscheibe 23 wird die Stützscheibe 25 aufgelegt. Das Filterelement 20 wird anschließend zwischen zwei beheizte Pressflächen eingespannt und in axialer Richtung verpresst. Dabei quellen die Folienendscheiben 23 unter der Wärmeeinwirkung auf. Das Folienmaterial dringt in die Faltenzwischenräume des Filtermediums 22 ein und verbindet sich dichtend mit dem Filtermedium 22. Die Stützscheibe 25 wird dabei in die Folienendscheibe 23 eingebettet.

Der zuvor nach dem Zweikomponentenverfahren hergestellten Deckel 36 wird mit dem Verbindungsrohrabschnitt 50 in die Anschlussöffnung 54 des Filtermediums 22 eingesteckt. Durch das Anschlussrohrstück 60 wird der Deckel 36 auf dem Filtermedium 22 zentriert. Die zunächst weiche und verformbare Folienendscheibe 23 und die Stützscheibe 25 sind elastisch, so dass die Wulst 58 gegen einen mechanischen Widerstand über den radial inneren Rand der Folienendscheibe 23 und der Stützscheibe 25 hinweg geschoben werden kann. Beim Überwinden der Folienendscheibe 23 wird ein akustisch wahrnehmbares Geräusch erzeugt. Nach dem Passieren der Folienendscheibe 23 liegt die Wulst 58 an den radial inneren Faltkanten des Filtermediums 22 unter einer in radialer Richtung wirksamen Verspannung formschlüssig an. Der Deckel 36 ist rein mechanisch durch Formschluss fest und stabil mit dem Filtermedium 22 verbunden.

Durch die beim Betrieb der Brennkraftmaschine herrschenden Betriebstemperaturen wird die Folienendscheibe 23 ausgehärtet und dadurch schwerer verformbar. Die Klemmverbindung gewinnt so an Zugfestigkeit.

Bei dem oben beschriebenen Ausführungsbeispiel eines Filters 10 sind unter anderem folgende Modifikationen möglich:

Die Erfindung ist nicht beschränkt auf den Filter 10 für Motoröl von Brennkraftmaschinen. Vielmehr kann sie auch bei andersartigen Filtern für Flüssigkeiten, beispielsweise bei Kraftstofffiltern oder Wasserfiltern, eingesetzt werden. Die Erfindung kann statt bei einer Brennkraftmaschine eines Kraftfahrzeugs auch bei einer andersartigen Brennkraftmaschinen, beispielsweise Industriemotoren, verwendet werden.

Die Wulst 58 kann statt umfänglich geschlossen auch unterbrochen entlang eines Teils der radial äußeren Umfangsseite des Verbindungsrohrabschnitts 50 verlaufen.

Statt der Folienendscheiben 23 können auch andersartige Endscheiben, beispielsweise Kunststoffendscheiben, verwendet werden, welche mit der Stirnfläche des Filtermediums 22 in anderer Weise verbunden, beispielsweise verklebt oder verschweißt, sind. Auf die Stützscheibe 25 kann dann verzichtet werden.

Die Rücklaufsperrmembran 32 kann statt eingegossen oder angespritzt auch in anderer Weise mit der Deckelringscheibe 34 verbunden sein. Beispielsweise können die beiden Bauteile miteinander verklebt oder verschweißt sein.

Es ist auch vorstellbar, dass auf den Fortsatz 46 verzichtet wird. Ebenso kann auch auf den Dichtungsabschnitt 66 der Rücklaufsperrmembran 32 verzichtet werden. Statt des Dichtungsabschnitts 66 kann auch eine separate Dichtung realisiert sein.

Auch auf die Nasen 40 verzichtet werden. Es kann auch ein andersartiger Abstandhafter realisiert sein. Die Nasen 40 müssen nicht zwingend am Ringscheibenabschnitt 38 befestigt sein.

Der Verbindungsrohrabschnitt 50 kann statt am Ringscheibenabschnitt 38 auch direkt an einer entsprechend ausgestalteten Endscheibe realisiert sein. In diesem Fall kann auf die Folienendscheibe 23 verzichtet werden. Eine derartige am Deckel 36 realisierte Endscheibe kann mittels dem Verbindungsrohrabschnitt 50 und der Wulst 58 rein mechanisch mit dem Anschlussabschnitt 56 des Filtermediums 22 verbunden sein.

## Patentansprüche

1. Filterelement (20) eines Filters (10) zur Filtrierung von Fluiden, insbesondere Motoröl oder Kraftstoff einer Brennkraftmaschine insbesondere eines Kraftfahrzeugs, mit einem insbesondere sternförmig gefallelen Fillermedium (22) in koaxialer Form, das an einer Anschluss-Stirnseite einen Anschlussabschnitt (56) mit einer Anschlussöffnung (54) zu einem Innenraum (28) des Filtermediums (22) aufweist für ein Anschlussrohrstück (60) eines Filtergehäuses (14), mit einem an dem Anschlussabschnitt (56) befestigten Deckelkörper (36), der eine harte Deckelringscheibe (34) aufweist, an der zu dieser koaxial eine flexible ringartige Rücklaufsperrmembran (32) befestigt ist, und ein zur Anschlussöffnung (54) koaxialer Deckeldurchlass (52) für das Anschlussrohrstück (60) durch die Deckelringscheibe (34) und die Rücklaufsperrmembran (32) hindurch führt, **dadurch gekennzeichnet, dass** auf der Seite der Deckelringscheibe (34), die dem Filtermedium (22) zugewandt ist, koaxial zum Deckeldurchlass (52) ein Verbindungsrohrabschnitt (50) angeordnet ist, der in der Anschlussöffnung (54) steckt und der an seiner radial äußeren Umfangsseite eine sich wenigstens teilumfänglich erstreckende Wulst (58) aufweist, deren Außendurchmesser größer ist als der kleinste Durchmesser der Anschlussöffnung (54), und die Wulst (58) und der Anschlussabschnitt (56) zumindest zur Montage in radialer Richtung relativ zueinander elastisch verformbar sind.

2. Filterelement nach Anspruch 1, **dadurch gekennzeichnet, dass** der Anschlussabschnitt (56) eine Ring-Endscheibe (25) aufweist, die koaxial zum Filtermedium (22) an der Anschluss-Stirnseite des Filtermediums (22) befestigt ist.

3. Filterelement nach Anspruch 1 oder 2, **dadurch gekennzeichnet, dass** die Deckelringscheibe (34) aus hartem Kunststoff und die Rücklaufsperrmembran (32) aus Silikon ist.

4. Filterelement nach einem der vorigen Ansprüche, **dadurch gekennzeichnet, dass** die Deckelringscheibe (34) auf der Seite, an der die Rücklaufsperrmembran (32) angeordnet ist, einen axialen Fortsatz (46) aufweist, der mit einem Befestigungsabschnitt (62) der Rücklaufsperrmembran (32) verbunden ist.

5. Filterelement nach einem der vorigen Ansprüche, **dadurch gekennzeichnet, dass** die Deckelringscheibe (34) eine Vielzahl von Ankeröffnungen (44) für entsprechende Befestigungsnasen (68) der Rücklaufsperrmembran (32) aufweist, die in der Nähe des Deckeldurchlasses (52) umfänglich verteilt angeordnet sind.

6. Filterelement nach einem der vorigen Ansprüche, **dadurch gekennzeichnet, dass** ein radial innerer Abschnitt (66) der Rücklaufsperrmembran (32) als radiale Dichtung zur Abdichtung des Deckeldurchlasses (52) gegen das Anschlussrohrstück (60) ausgebildet ist.

7. Filter (10) zur Filtrierung von Fluiden, insbesondere Motoröl oder Kraftstoff einer Brennkraftmaschine insbesondere eines Kraftfahrzeugs, mit einem Filterelement (20) insbesondere nach einem der Ansprüche 1 bis 6, das ein insbesondere sternförmig gefaltetes Filtermedium (22) in koaxialer Form umfasst, das an einer Anschluss-Stirnseite einen Anschlussabschnitt (56) mit einer Anschlussöffnung (54) zu einem Innenraum (28) des Filtermediums (22) aufweist für ein Anschlussrohrstück (60) eines Filtergehäuses (14), und mit einem an der Stirnseite des Filtermediums (22) angeordneten Deckelkörper (36), der eine harte Deckelringscheibe (34) aufweist, an der eine flexible ringartige Rücklaufsperrmembran (32) koaxial befestigt ist, wobei ein zur Anschlussöffnung (54) koaxialer Deckeldurchlass (52) für das Anschlussrohrstück (60) durch die Deckelringscheibe (34) und die Rücklaufsperrmembran (32) hindurch führt, **dadurch gekennzeichnet, dass** auf der Seite der Deckelringscheibe (34), die dem Filtermedium (22) zugewandt ist, ein zum Deckeldurchlass (52) koaxialer Verbindungsrohrabschnitt (50) befestigt ist, dessen Außendurchmesser kleiner ist als der Durchmesser der Anschlussöffnung (54), und der an seiner radial äußeren Umfangsseite eine sich wenigstens teilumfänglich erstreckende Wulst (58) aufweist, deren Außendurchmesser größer ist als der Durchmesser der Anschlussöffnung (54), und die Wulst (58) und der Anschlussabschnitt (46) zumindest zur Montage in radialer Richtung relativ zueinander elastisch verformbar sind.

## Claims

1. Filter element (20) of a filter (10) for filtering fluids, in particular engine oil or fuel of an internal combustion engine, in particular of a motor vehicle, having in particular a star-shaped folded filter medium (22) in coaxial form, which features on one connection front face a connection section (56) with a connecting orifice (54) to an interior area (28) of the filter medium (22) for a connection pipe piece (60) of a filter housing (14), with a cover body (36) attached to the connection section (56), which features a hard annular cover disk (34), at which a flexible ring-type anti-drain membrane (32) is coaxially attached in relation to it, and a cover passage (52) coaxial in relation to the connecting orifice (54) for the connection pipe piece (60) leads through the annular cover disk (34) and the anti-drain membrane (32), **characterized in that** on the side of the annular cover disk (34), which faces the filter medium (22), a connection pipe section (50) is disposed coaxially in relation to the cover passage (52), which sticks in the connecting orifice (54) and which features at its radially outer circumference an at least part-circumferentially extending bead (58), the external diameter of which is larger than the smallest diameter of the connecting orifice (54), and that the bead (58) and the connection section (56) are elastically deformable relative to each other in radial direction at least during mounting.

2. Filter element according to claim 1, **characterized in that** the connection section (56) features an annular end plate (25), which is coaxially attached in relation to the filter medium (22) at the connecting front face of the filter medium (22).

3. Filter element according to claim 1 or 2, **characterized in that** the annular cover disk (34) is made of hard synthetic material and the anti-drain membrane (32) of silicone.

4. Filter element according to one of the above claims, **characterized in that** the annular cover disk (34) features on the side, on which the anti-drain membrane (32) is disposed, an axial extension (46), which is connected with an attachment section (62) of the anti-drain membrane (32).

5. Filter element according to one of the above claims, **characterized in that** the annular cover disk (34) features a plurality of anchoring openings (44) for corresponding attachment lugs (68) of the anti-drain membrane (32), which are distributed circumferentially in the vicinity of the cover passage (52).

6. Filter element according to one of the above claims, **characterized in that** a radially inner section (66) of the anti-drain membrane (32) is designed as radial seal for sealing the cover passage (52) against the connection pipe piece (60).

7. Filter (10) for filtering fluids, in particular engine oil or fuel of an internal combustion engine, in particular of a motor vehicle, with a filter element (20) in particular according to one of the claims 1 to 6, which comprises an in particular star-shaped folded filter medium (22) in coaxial form, which features on one connection front face a connection section (56) with a connecting orifice (54) to an interior area (28) of the filter medium (22) for a connection pipe piece (60) of a filter housing (14), and with a cover body (36) disposed at the front face of the filter medium (22), which features a hard annular cover disk (34), at which a flexible ring-type anti-drain membrane (32) is coaxially attached, a cover passage (52) coaxial in relation to the connecting orifice (54) for the connection pipe piece (60) leading through the annular cover disk (34) and the anti-drain membrane (32), **characterized in that** on the side of the annular cover disk (34), which faces the filter medium (22), a coaxial connection pipe section (50) is attached in relation to the cover passage (52), the external diameter of which is smaller than the diameter of the connecting orifice (54), and which features at its radially outer circumference an at least part-circumferentially extending bead (58), the external diameter of which is larger than the diameter of the connecting orifice (54), and that the bead (58) and the connection section (46) are elastically deformable relative to each other in radial direction at least during mounting.

## Revendications

1. Élément filtrant (20) d'un filtre (10) destiné au filtrage de fluides, notamment d'huile de moteur ou de carburant d'un moteur à combustion interne, en particulier d'un véhicule automobile, avec un milieu filtrant (22) notamment plié en forme d'étoile en sens coaxial qui présente sur une face frontale de raccordement une section de raccordement (56) avec une ouverture de raccordement (54) à un espace intérieur (28) du milieu filtrant (22) pour une pièce de raccord tubulaire (60) d'un boîtier de filtre (14), avec un corps de couvercle (36) fixé à la section de raccordement (56) qui est doté d'un disque annulaire de couvercle dur (34) sur lequel est fixée une membrane anti-retour (32) annulaire flexible disposée de manière coaxiale par rapport au disque, un passage de couvercle (52) coaxial par rapport à l'ouverture de raccordement (54) pour la pièce de raccord tubulaire (60) traversant le disque annulaire de couvercle (34) et la membrane anti-retour (32), **caractérisé en ce que**, du côté du disque annulaire de couvercle (34) orienté vers le milieu filtrant (22), une section tubulaire de raccordement (50) est disposée de manière coaxiale par rapport au passage de couvercle (52), laquelle est introduite dans l'ouverture de raccordement (54) et présente, sur son côté circonférentiel extérieur radial, un bourrelet (58) s'étendant au moins sur une partie de la circonférence et dont le diamètre extérieur est plus grand que le diamètre minimum de l'ouverture de raccordement (54), et que le bourrelet (58) et la section de raccordement (56) sont déformables de façon élastique l'une par rapport à l'autre en sens radial, au moins pour le montage.

2. Élément filtrant selon la revendication 1, **caractérisé en ce que** la section de raccordement (56) présente un disque d'extrémité (25) annulaire qui est fixé de manière coaxiale par rapport au milieu filtrant (22) sur la face frontale de raccordement du milieu filtrant (22).

3. Élément filtrant selon la revendication 1 ou 2, **caractérisé en ce que** le disque annulaire de couvercle (34) est en matière plastique dure et la membrane anti-retour (32) est en silicone.

4. Élément filtrant selon l'une des revendications précédentes, **caractérisé en ce que** le disque annulaire de couvercle (34) présente, du côté sur lequel est disposée la membrane anti-retour (32), une saillie (46) axiale qui est reliée avec une section de fixation (62) de la membrane anti-retour (32).

5. Élément filtrant selon l'une des revendications précédentes, **caractérisé en ce que** le disque annulaire de couvercle (34) présente un grand nombre d'ouvertures d'ancrage (44) pour des ergots de fixation (68) correspondants de la membrane anti-retour (32) qui sont réparties de manière circonférentielle à proximité du passage de couvercle (52).

6. Élément filtrant selon l'une des revendications précédentes, **caractérisé en ce qu'**une section intérieure radiale (66) de la membrane anti-retour (32) est exécutée en tant que joint radial afin d'étancher le passage de couvercle (52) vis-à-vis de la pièce tubulaire de raccordement (60).

7. Filtre (10) destiné au filtrage de fluides, notamment d'huile de moteur ou de carburant d'un moteur à combustion interne, en particulier d'un véhicule automobile, avec un élément filtrant (20), notamment selon l'une des revendications 1 à 6, qui comprend un milieu filtrant (22) notamment plié en forme d'étoile en sens coaxial qui présente sur une face frontale de raccordement une section de raccordement (56) avec une ouverture de raccordement (54) à un espace intérieur (28) du milieu filtrant (22) pour une pièce de raccord tubulaire (60) d'un boîtier de filtre (14), et avec un corps de couvercle (36) placé sur la face frontale du milieu filtrant (22) qui est doté d'un disque annulaire de couvercle dur (34) sur lequel est fixée une membrane anti-retour (32) annulaire flexible disposée de manière coaxiale, un passage de couvercle (52) coaxial par rapport à l'ouverture de raccordement (54) pour la pièce de raccord tubulaire (60) traversant le disque annulaire de couvercle (34) et la membrane anti-retour (32), **caractérisé en ce que**, du côté du disque annulaire de couvercle (34) orienté vers le milieu filtrant (22), une section tubulaire de raccordement (50) coaxiale par rapport au passage de couvercle (52) est fixée, dont le diamètre extérieur est plus petit que le diamètre de l'ouverture de raccordement (54) et laquelle présente, sur son côté circonférentiel extérieur radial, un bourrelet (58) s'étendant au moins sur une partie de la circonférence et dont le diamètre extérieur est plus grand que le diamètre de l'ouverture de raccordement (54), et que le bourrelet (58) et la section de raccordement (46) sont déformables de façon élastique l'une par rapport à l'autre en sens radial, au moins pour le montage.
